# EUROPÄISCHE PATENTSCHRIFT

(11) **EP 2 340 983 B1**
(45) Veröffentlichungstag und Bekanntmachung des Hinweises auf die Patenterteilung: **30.10.2013**
(21) Anmeldenummer: 11000011.4
(22) Anmeldetag: 03.01.2011
(51) Int. Cl.: B62H 7/00, B60B 33/04

(54) **Motorradschräglagentrainer**
Motorcycle incline trainer
Entraîneur en position inclinée pour motocycle

(30) Priorität: 02.01.2010 DE 202010000584 U
(43) Veröffentlichungstag der Anmeldung: 06.07.2011
(73) Patentinhaber: Rausch, Alois, 83544 Albaching (DE)
(72) Erfinder: Rausch, Alois, 83544 Albaching (DE)
(74) Vertreter: Gössmann, Christoph Tassilo

(56) Entgegenhaltungen:
- DE-A1-102006 013 328
- DE-U1- 9 202 864
- GB-A- 2 001 288
- GB-A- 2 288 777
- US-A- 2 439 755

## Beschreibung

Die Erfindung betrifft einen Motorradschräglagentrainer.

Eine Vorrichtung zum Motorradschräglagentraining, im Folgenden Motorradschräglagentrainer genannt, ist aus der DE 92 02 864 U1 bekannt. In ihr ist ein Motorradschräglagentrainer mit Auslegern beschrieben. Dieser Motorradschräglagentrainer erlaubt zwar das relativ sichere Fahren eines Motorrads in extremer Schräglage. Dieser Motorradschräglagentrainer ist jedoch nur zum grundsätzlichen Lernen des Schräglagenfahrens mit einem Motorrad bei relativ niedriger Geschwindigkeit geeignet. Zum Üben des Schräglagenfahrens bei hohen Geschwindigkeiten von 150 km/h bis über 200 km/h, wie auf einem Rennkurs, ist der bekannte Motorradschräglagentrainer nicht geeignet, da sie die Aerodynamik eines Motorrads zu sehr beeinflussen.

Die DE 10 2006 013 328 offenbart eine Vorrichtung mit den Merkmalen des Oberbegriffs des Anspruchs 1.

Aufgabe der Erfindung ist es, den Stand der Technik zu verbessern und einen Motorradschräglagentrainer zur Verfügung zu stellen, der auch bei hohen Geschwindigkeiten ein Schräglagentraining mit einem Motorrad ermöglicht.

Diese Aufgabe wird durch eine Vorrichtung gemäß Anspruch 1 gelöst.

Gegenstand der Erfindung ist ein Motorradschräglagentrainer, der zwei Ausleger 1, die an einem am Motorrad angebrachten Halteteil mit zwei Aufnahmevorrichtungen oder zwei getrennt angebrachten Halteteilen mit jeweils einer Aufnahmevorrichtungen befestigt sind, wobei das Halteteil oder die zwei getrennt angebrachten Halteteilen jeweils an der Motorradlängsseite im oberen Rahmenbereich und die Ausleger 1. an den Halteteilen anbringbar sind, wobei die Ausleger 1 jeweils am Auslegerende eine Schwinge aufweisen, die ein Stützrad aufweist, wobei die Schwinge 360° um ihre Gierachse drehbar ist, so dass das Motorrad bei Bodenkontakt mit den Auslegern nicht unkontrolliert ins Schleudern kommen kann und die Räder sind vorzugsweise aus Gummi oder Teflon, bevorzugt aus Teflon und ein Dämpfungselement aufweist.

Die erfindungsgemäße Schwinge ist am Auslegerende angebracht, vorzugsweise über ein Flansch. Die erfindungsgemäße Schwinge ist am Auslegerende vorzugsweise in einem Kugellager, um 360° um ihre Gierachse drehbar, gelagert. Erfindungsgemäß handelt es sich vorzugsweise um eine zweiarmige Schwinge, wobei auch eine einarmige Schwinge möglich ist. Am freien Ende der Schwinge wird die Achse oder das Wälzlager eines Rades aufgenommen. Die horizontale Rotationsachse der Schwinge liegt quer zur Drehung des Rades und ist drehbar an zwei senkrechten Träger befestigt, die an dem Auslegerende drehbar befestigt sind. Die Rotationswinkel der Schwinge wird durch ein Dämpfungselement begrenzt, wobei es sich vorzugsweise um eine Metallfeder oder bevorzugt um eine Elastomerfeder vorzugsweise nach DIN 9835 handelt. Die Elastomerfeder ist vorzugsweise aus Chloropren-Kautschuk, Polyurethan-Kautschuk, SilikonKautschuk, bevorzugt ist Polyurethan-Kautschuk oder SilikonKautschuk mit einer Shore A Härte von vorzugsweise 70 bis 97, bevorzugt 80 bis 92, besonders bevorzugt von 85 bis 93, ganz besonders bevorzugt von 90 bis 92 (nach DIN 53505). Diese Elastomerfeder ist zylinderförmig und weist in der Mitte eine Bohrung auf. Diese Elastomerfeder befindet sich zwischen den Schwingenarmen und der Befestigung der Schwinge am Auslegerende. Vorzugsweise befindet sich eine horizontale Fläche zwischen den Schwingenarmen, auf der sich das Dämpfungselement nach unten abstützen kann, während sich oben an der Schwinge ein Führungsbolzen für das Dämpfungselement befindet, der kürzer als das Dämpfungselement ist oder zwei Führungsbolzen einen oben und einen unten mit einem Zwischenraum, wobei diese Führungsbolzen dafür sorgen, dass das Dämpfungselement nicht ausbrechen kann. Zwischen dem Kugellager und dem Dämpfungselement befinden sich noch vorzugsweise zumindest eine Beilagscheibe, bevorzugt zwei oder drei Beilagscheiben, die als Reibscheiben zwischen dem Dämpfungselement und dem Kugellager dienen.

Das Dämpfungselement und damit die Schwinge steht unter Vorspannung, so dass der Rotationswinkel etwas geringer ist. Dies wird durch einen Anschlag erreicht, der den Rotationswinkel der Schwinge von vornherein verkleinert. Durch die Vorspannung wird die Schwinge in der Drehung schwergängig. Dadurch wird erreicht, dass die Schwinge nach dem Aufsetzen immer ihre dadurch erhaltene Stellung beibehält und so beim nächsten Aufsetzen wieder in dieser Stellung aufsetzt. Diese Vorspannung verhindert ein Flattern des Stützrades, so dass die Haftung der Motorradreifen beim Wegrutschen in keiner Weise durch das Stützrad beeinflußt wird.

Der erfindungsgemäße Motorradschräglagentrainer, der ein am Motorrad angebrachtes Halteteil oder zwei getrennt angebrachte Halteteile und zwei auf jeder Seite des Motorrads an diesem angebrachten Halteteil zwei vorzugsweise längsverstellbare Ausleger aufweist, die Halteteile können fest mit dem Rahmen verbunden sein oder vorzugsweise demontierbar sein.

Das Halteteil oder die zwei getrennt angebrachten Halteteile werden an einer Motorradlängsseite vorzugsweise im oberen Rahmenbereich, bevorzugt im Bereich des Lenkkopfes oder im oberen Heckbereich vorzugsweise demontierbar angebracht und in der Aufnahmevorrichtung des Halteteils wird der Ausleger vorzugsweise im wesentlichen senkrecht zur Fahrzeuglängsachse eines Motorradrahmens angebracht, also im 90° Winkel zum aufrecht stehenden Motorrad, wobei sich dieser Winkel auch, vorzugsweise rahmennahe, verstellt werden kann, vorzugsweise über ein Gelenk, indem der Winkel des Auslegers zur Motorradachse (Achse des aufrecht stehenden Motorrads) mehr oder weniger als 90° beträgt, wobei die Länge der Ausleger vorzugsweise beliebig verstellbar ist und so der Schräglagenwinkel des Motorrads zur Straße auch über die Längenverstellung der Ausleger verstellt werden kann, und wobei die äußeren Auslegerenden jeweils Stützräder aufweisen.

Der erfindungsgemäße Ausleger weist an seinem Ende eine Schwinge auf, die ein Stützrad aufweist,

Der erfindungsgemäße Motorradschräglagentrainer ist im wesentlichen dazu gedacht dem Motorradfahrer als Indikator zu dienen, welche maximale Schräglage er auf einem bestimmten Rennkurs sicher in Abhängigkeit vom Kurvenradius, Strassenbelag, Reifenmischung und Motorradstraßenlage fahren kann. Die maximale Schräglage wird durch einen erfahrenen Instruktor festgestellt. Danach wird ein Ausleger der gewünschten Länge montiert, also durch Austausch unterschiedlich langer Ausleger und Befestigung vorzugsweise durch einen Zentralverschluss vorzugsweise mit Klickverschluß oder durch eine Verschraubung. Bevorzugt ist jedoch ein längsverstellbarer Ausleger, der in der Aufnahmevorrichtung am Halteteil vorzugsweise beliebig längsverstellbar angebracht ist. Die Schwinge mit dem Stützrad läßt sich in einer bevorzugten Ausführungsform im Winkel zum Ausleger verstellen, so dass die Stützteile bei Bodenkontakt immer senkrecht zu ihrer Laufachse auf dem Boden aufkommen und nicht schräg, so dass sie einen optimalen Bodenkontakt aufweisen. Bevorzugt wird der Winkel über ein Gelenk verstellt, wobei sich das Gelenk um eine Zentralachse drehen läßt und mit einem Bolzen über kreisförmig angeordnete Bohrungen feststellen und verstellen läßt oder bevorzugt in dem die Zentralachse über eine Klemmverbindung festgestellt wird.

Die Aufnahmevorrichtung ist vorzugsweise rund oder rechteckig und innen hohl.

Die Aufnahmevorrichtung und der Ausleger bestehen aus zwei teleskopartig ineinander verschiebbaren Rohre, welche eine Vielzahl voneinander beabstandete Querbohrungen aufweisen, die miteinander zur Deckung bringbar sind, so daß die gegeneinander verschiebbaren Rohre mittels eines durch die Bohrungen gesteckten, mit einem Splint sicherbaren Bolzens oder einer Schraube mit Mutter in ihrer Lage zueinander fixierbar sind. Eine Längsverstellung ist auch möglich, indem der Ausleger in der Aufnahmevorrichtung auf die entsprechende Länge geschoben wird und dann mittels einer Klemmbefestigung, wie einer Klemmschrauben oder Klemmringen festgestellt wird. Eine Längsverstellung ist auch möglich, indem der Ausleger in der Aufnahmevorrichtung über ein Gewinde verstellbar ist. Die Längsverstellung kann auch über eine Zahnstange und vorzugsweise eine Handkurbel mit einem Zahnrad erfolgen. Der Ausleger kann auch so angebracht sein, dass es insbesondere, bei einer Klemmverbindung, bei Bodenkontakt nachgibt und in die Aufnahmevorrichtung rutscht, um einen Sturz zu verhindern. Vorzugsweise kann zwischen Aufnahmevorrichtung und Ausleger ein in Längsrichtung des Auslegers der Aufnahmevorrichtung wirksamer Stoßdämpfer angebracht sein, um Stöße beim Aufsetzen des Auslegers zu dämpfen.

Die Ausleger (1, 1) des Motorradschräglagentrainers sind vorzugsweise aus Stahl oder Aluminium oder Kohlefaserverbundmaterial gefertigt.

In einer bevorzugten Ausführungsform weißt die Schwinge mit Stützrad vorzugsweise an zumindest einer Seite oder bevorzugt auch an beiden Seiten ein Windleitblech auf, das durch den Fahrtwind das Rad immer in Fahrtrichtung ausrichtet. Das Windleitblech auf dem Stützrad optimiert den Aufsetzwinkel des Stützrades bei hohen Geschwindigkeiten.

In einer weiteren bevorzugten Ausführungsform ist der Ausleger rechtwinklig, also bei aufrechtem Motorrad sind die Auslegerenden dem Boden, um den abgewinkelten Weg näher, so dass der Ausleger, um eine Schräglage von x Grad anzuzeigen, nicht so lang sein muss, wie er in einer geraden Ausführungsform wäre, da er durch die rechtwinklige Ausführungsform bei gleicher Schräglage dem Boden näher ist, wie wenn er gerade wäre, die rechtwinklige Ausführungsform verringert also die Baubreite bei kleinem Einstellwinkel (geringem Schräglagenwinkel).

Der erfindungsgemäße Motorradschräglagentrainer weist vorzugsweise eine Schutzvorrichtung (3) auf, die sich vorzugsweise nach hinten erstreckt. Dabei ist die Schutzvorrichtung vorzugsweise im 90° Winkel zur Längsachse des Auslegers vorzugsweise oben am Ausleger angeordnet, also parallel zum Motorradrahmen, also längs zum Motorradrahmen, dabei ist die Schutzvorrichtung bevorzugt rechteckig, besonders bevorzugt trapezförmig angeordnet, wobei das Trapez sich nach hinten verjüngt. Die Schutzvorrichtung (3) kann ein fester Bestandteil des Auslegers sein oder demontierbar sein. Die Schutzvorrichtung (3) weist vorzugsweise die Form einer Schutzfläche, wie eine Platte, einen Bügel, ein Gurtzeug oder Gitter auf. Falls die Schutzvorrichtung eine Schutzfläche, wie eine Platte ist, kann diese aus Kunststoff, Holz oder bevorzugt Metall sein, wobei ein Bügel vorzugsweise aus Metall gefertigt ist, während ein Gurtzeug aus einem textilen Gewebe oder Leder ist. Ein Gitter ist vorzugsweise aus Leder, Kunststoff, Kohlefaserverbundmaterial oder Metall gefertigt. Am hinteren Ende der Schutzvorrichtung unten, zur Längsachse des Motorradrahmens gesehen, befindet sich vorzugsweise ein Bremspuffer, vorzugsweise ein Formkörper aus einem Material, das bei Bodenkontakt eine Bremswirkung aufweist, wie vorzugsweise Holz, ein Kunststoff, ein Elastomer, Gummi, bevorzugt Reifengummi. Dieser Bremspuffer-Formkörper kann jede beliebige Form aufweisen, wobei jedoch ein rechteckiger Formkörper mit einer relativ großen Fläche, die mit dem Boden in Kontakt kommen kann, bevorzugt ist. Dieser Bremspuffer mindert die Kreiselkräfte im Fall des Verlustes der Haftung des Hinterrads, so dass ein Schleudern, im Falle eines Sturzes, um die eigene Achse, möglichst verhindert wird.

Die Schutzvorrichtung wird vorzugsweise an der gleiche Haltevorrichtung wie der Ausleger angebracht und kann fest angebracht sein oder kann auch demontierbar sein und damit wahlweise angebracht oder abgenommen werden. Eine Verbindung ist vorzugsweise durch Schrauben oder Bolzen mit Sicherungssplinten möglich.

Die Schutzvorrichtung kann verhindern, dass der übende Motorradfahrer im Falle eines harten Aufsetzens der Stützen vom Motorrad auf die Fahrbahn fällt. Der Übende kommt auf der Schutzfläche zum Liegen bzw. kann sich auf dieser abstützen und behält die volle Kontrolle über das Motorrad. So kann dieses auf der Schutzfläche liegend sicher zum Stillstand gebracht werden. Bei einer Neukonstruktion kann von vornherein die Schutzfläche in den Ausleger- bzw. Stützarm integriert sein. Zusätzlich können die Flächen der Schutzvorrichtung am Motorrad oder Ausleger auch aerodynamische Aufgaben übernehmen. (ähnlich einer Fläche von einem Flugzeug). Der Abstand vom Fahrer zur Schutzvorrichtung bleibt immer gleich, unabhängig zum eingestellten Schräglagenwinkel. Wenn der Fahrer auf die Schutzvorrichtung fällt oder diese den Boden berührt, stoppt ein daran vorzugsweise befestigter Notausschalter den Motor. So wird das Motorrad automatisch abgebremst. Die neue Schutzvorrichtung, die in Fahrtrichtung vor der Stützstrebe rechts und links angebracht ist, schützt den Arm und die Hand des Fahrers im Falle eines Sturzes.

Ein weiterer Gegenstand der Erfindung ist eine Schwinge an sich, wie sie oben beschrieben wird. Eine derartige Schwinge kann nicht nur bei einem Motorradausleger verwendet werden, sondern auch bei allen Anwendungen bei denen die Eigenschaften der erfindungsgemäßen Schwinge gebraucht werden.

Die Vorteile des erfindungsgemäßen Motorradschräglagentrainer sind insbesondere:
- bei Trainingsfahrten an der Haftgrenze der Reifen wird die Fahrphysik nicht mehr beeinträchtigt
- die Motorradrahmen müsse nicht mehr verstärkt oder abgeändert werden
die
- Baubreite des gesamten Fahrzeuges wird kleiner
- je größer die Schräglage ist, desto kürzer ist der Ausleger und desto geringer sind die Hebelkräfte, die durch den Ausleger auf den Motorradrahmen wirken. Im Vergleich dazu ist ein Motorradschräglagentrainer nach dem Stand der Technik, der am Motorradrahmen befestigt ist und bei dem die mögliche Schräglage nur durch Verstellen des Winkels des Auslegers zum Motorradrahmen verstellt wird, immer gleich lang.
- Die Stützkonstruktion wird mit dem Motorradrahmen alleine oder mit Zuhilfenahme der Motorradhalterung am Rahmen jeweils seitlich in Fahrtrichtung oder zentral im Rahmen verschraubt.
- Die Gestaltung der Aufnahmen für die Stützkonstruktion ist mit geringem Aufwand wieder vom Motorradrahmen demontierbar; das Motorrad kann so wieder im öffentlichen Straßenverkehr betrieben werden
- Durch die zentrale Abstützung ist die Bewegungsfreiheit des Motorradfahrers nicht mehr beeinträchtigt.
- Die neue Schutzfläche, die in Fahrtrichtung vor der Stützstrebe rechts und links angebracht ist, schützt den Arm und die Hand des Fahrers im Falle eines Sturzes.
- Dieses System ist für alle Motorradtypen verwendbar - Chopper, Supersportler und auch für Offroadbikes.
- Der Ausleger kann auch als Sturzbügel verwendet werden.
- Ein Winkelstück verringert die Baubreite bei kleinem Einstellwinkel (kleiner Schräglagenwinkel)
- Die erfindungsgemäße Schwinge mit Dämpfung sorgt dafür, dass ein Aufsetzen mit dem Aufleger beim Schräglagentraining völlig problemlos ist und zusätzlich der Motorradrahmen durch die erfindungsgemäße Schwinge kaum belastet wird.

### Figuren

**Figur 1**

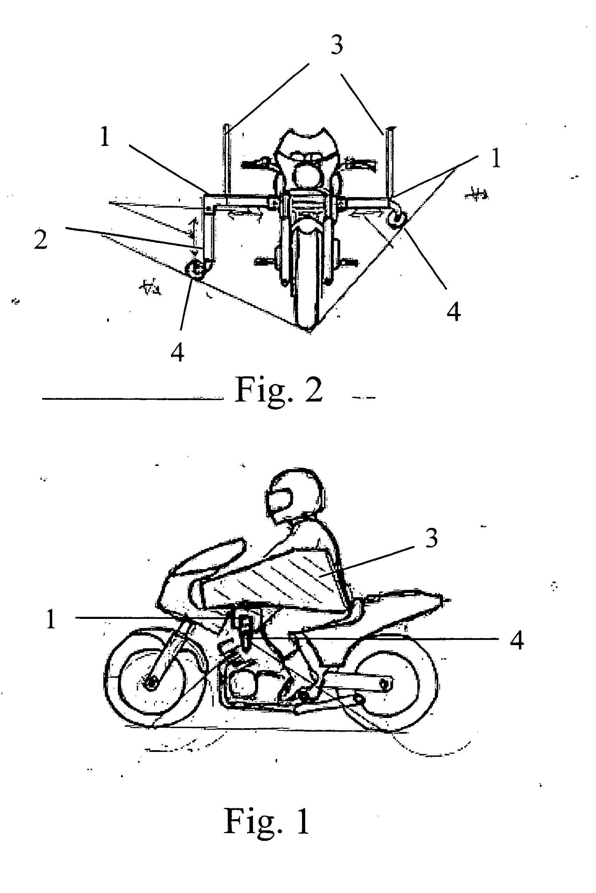

   In Figur 1 wird der erfindungsgemäße Motorradschräglagentrainer von der Seite gezeigt, wobei der Motorradschräglagentrainer mit dem erfindungsgemäßen Ausleger (1) mit Stützrad (4) und mit der Schutzvorrichtung (3) zu sehen ist.
**Figur 2**
   In Figur 2 wird der erfindungsgemäße Motorradschräglagentrainer von vorne gezeigt, wobei die Ausleger (1) mit Stützrädern (4) zu sehen ist. Des Weiteren ist ein um 90° abgewinkelter Ausleger (2) mit Stützrad (4) zu sehen, sowie die längs zum Motorradrahmen montierte Schutzvorrichtung (3).
**Figur 3**

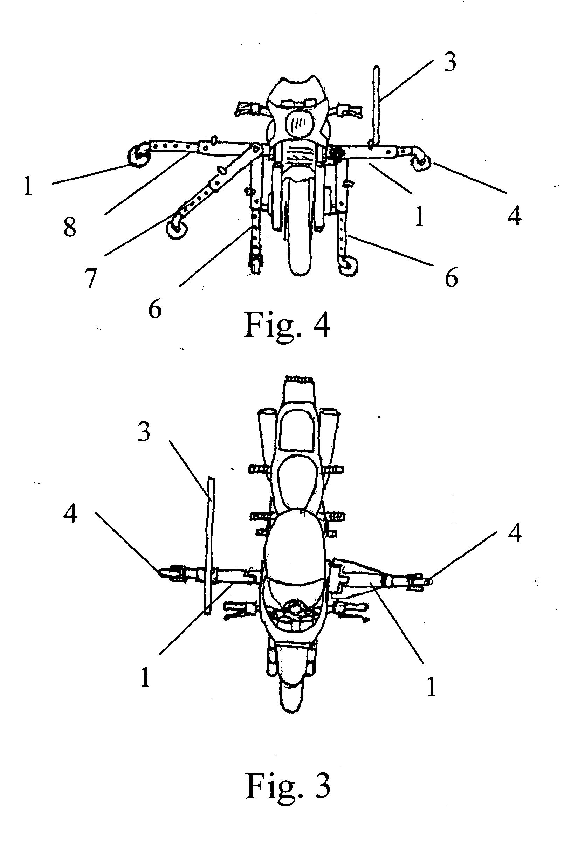

   In Figur 3 wird der erfindungsgemäße Motorradschräglagentrainer in Draufsicht gezeigt, wobei der Motorradschräglagentrainer mit dem erfindungsgemäßen Ausleger (1) mit Stützrad (4) und mit der Schutzvorrichtung (3) zu sehen ist.
**Figur 4**
   In Figur 4 wird der erfindungsgemäße Motorradschräglagentrainer von vorne gezeigt, wobei die Ausleger (1) an einem Gelenk (5) mit Stützrädern (4) zu sehen ist, der über einen Bolzen, der in längs auf dem Ausleger (1) angeordneten Bohrungen längsverstellbar ist. Des Weiteren ist der über das Gelenk abgewinkelte Ausleger (1) in einem Winkel von 0° (6), 45° (7) und 90° (8) Winkel zur Motorradachse zu sehen, sowie die längs zum Motorradrahmen montierte Schutzvorrichtung (3).
**Figur 5**

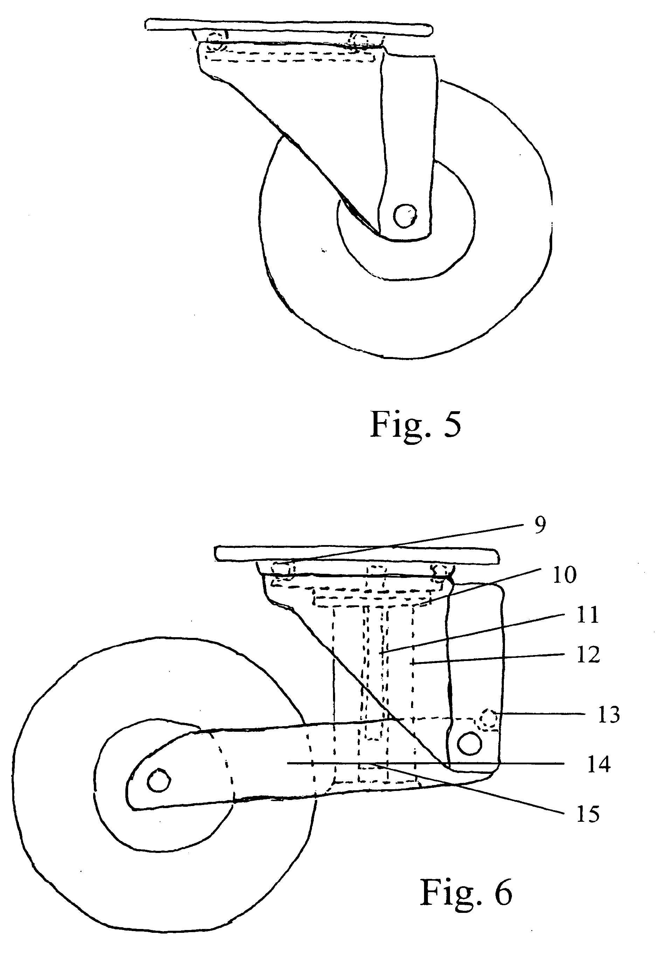

   Figur 5 zeigt eine Lenkrolle nach dem Stand der Technik.
**Figur 6**
   Figur 6 zeigt die erfindungsgemäße Schwinge, die ein Kugellager 9, Reibscheiben 10, den Führungsbolzen 11, eine Elastomerfeder 12, den Vorspannanschlag 13, den Schwingenarm 14 und den Anschlag für den Führungsbolzen aufweist.

## Patentansprüche

1. Motorradschräglagentrainer, der zwei Ausleger 1, die an einem am Motorrad angebrachten Halteteil mit zwei Aufnahmevorrichtungen oder zwei getrennt angebrachten Halteteilen mit jeweils einer Aufnahmevorrichtungen befestigt sind, wobei das Halteteil oder die zwei getrennt angebrachten Halteteilen jeweils an der Motorradlängsseite im oberen Rahmenbereich und die Ausleger (1) an den Halteteilen anbringbar sind, wobei die Ausleger (1) jeweils am Auslegerende eine Schwinge (14) aufweisen, die ein Stützrad (4) aufweist, wobei die Schwinge 360° um ihre Gierachse drehbar ist und **dadurch gekennzeichnet ist, dass** sie ein Dämpfungselement (12) aufweist.

2. Motorradschräglagentrainer nach Anspruch 1, **dadurch gekennzeichnet, dass** das Dämpfungselement (12) ein Elastomer aufweist.

3. Motorradschräglagentrainer nach Anspruch 2, **dadurch gekennzeichnet, dass** das Dämpfungselement (12) eine Shore A Härte von 70 bis 97 (nach DIN 53505) aufweist.

4. Motorradschräglagentrainer nach Anspruch 2 bis 3, **dadurch gekennzeichnet, dass** das Dämpfungselement (12) einen Führungsbolzen (11) aufweist, der eine geringer Länge wie das Dämpfungselement aufweist.

5. Motorradschräglagentrainer nach Anspruch 3 bis 4, **dadurch gekennzeichnet, dass** das Dämpfungselement (12) unter Vorspannung steht.

6. Motorradschräglagentrainer nach Anspruch 2 bis 5, **dadurch gekennzeichnet, dass** das Dämpfungselement (12) unter Vorspannung steht, indem der Weg der Schwinge (14) durch einen Anschlag verkürzt wird.

7. Motorradschräglagentrainer nach Anspruch 1, **dadurch gekennzeichnet, dass** der Winkel der Ausleger (1) zu der Motorradachse, die Achse des aufrechtstehenden Motorrads verstellbar ist.

8. Motorradschräglagentrainer nach einem oder mehreren der Ansprüche 1 bis 3, **dadurch gekennzeichnet, dass** der Ausleger (1) längsverstellbar ist.

9. Motorradschräglagentrainer nach einem oder mehreren der Ansprüche 1 bis 6, **dadurch gekennzeichnet, dass** die Schwinge (14) mit dem darin angebrachten Stützrad (4) bei der Drehung schwergängig ist, so dass sich die Schwinge nicht ohne Einwirkung von Außen selbst dreht, wobei die Schwinge 360° um ihre Gierachse drehbar ist.

10. Motorradschräglagentrainer nach einem oder mehreren der Ansprüche 1 bis 8, **dadurch gekennzeichnet, dass** an jedem Ausleger (1) oben ein Schutzschild (3) längs zum Motorradrahmen, also im 90° zur Auslegerlängsachse angebracht ist, auf dem sich der Motorradfahrer bei einem Sturz abstützen kann.

## Claims

1. Motorcycle incline trainer, comprising two arms (1), which are attached on a holding element which is mounted on the motorcycle with two workholding devices or two separately mounted holding elements each having a workholding device, wherein the holding element or the two separately mounted holding elements are attachable of each of the longitudinall side of the motorcycle in the upper frame portion and the arms (1) are attachable in the workhoding devices, wherein the arm (1) on each end of the arm have a swingarm (14) that has a supporting wheel (4), wherein the swingarm (14) is rotatable 360 degrees around its yaw axis and **characterized in that** the swingarm (14) comprises a damping element.

2. Motorcycle incline trainer according to claim 1, **characterized in that** the damping element (12) comprises an elastomer .

3. Motorcycle incline trainer according to claim 2, **characterized in that** the damping element (12) has a Shore A hardness of 70 to 97 (according to DIN 53505).

4. Motorcycle incline trainer according to claim 2 to 3, **characterized in that** the damping element (12) comprises a guiding element (11) having a smaller length as the damping element (12).

5. Motorcycle incline trainer according to claim 3 to 4, **characterized in that** the damping element (12) is prestressed.

6. Motorcycle incline trainer according to claim 2-5, **characterized in that** the damping element (12) is prestressed by the way that the swing arm (14) is shortened by a block.

7. Motorcycle incline trainer according to claim 1, **characterized in that** the angle of the arm (1) to the motorcycle axis (axis of the upright motorcycle) is adjustable.

8. Motorcycle incline trainer by one or more of Claims 1 to 3, **characterized in that** the arm is 1 longitudinally adjustable.

9. Motorcycle incline trainer according to one or more of Claims 1 to 6, **characterized in that** the swingarm is hard steering in rotation with the therein mounted support wheel (4), so that the swingarm does not rotate without any influence from outside itself, whereby the swingarm is rotatable 360 degrees about its yaw axis.

10. Motorcycle incline trainer by one or more of Claims 1 to 8, **characterized in that** at each arm (1) above a shield (3) is attached longitudinally to the motorcycle frame, in 90 degrees to the axis of the arm, on which the motorcyclist can be hold up in a downfall.

## Revendications

1. Appareil entraînement en position inclinée pour motocycle, qui a deux bras 1, qui sont fixés avec des dispositifs d'incorporation à un dispositif de fixation attaché au motocycle avec deux dispositifs d'incorporations ou deux dispositifs de fixation séparés les uns dans chaque cas, par lequel le dispositif de fixation ou deux dispositifs de fixation séparés les uns à côté long du motocycle dans la zone supérieure du cadre, et les bras 1 des dispositifs de fixation sont, dans chaque cas pouvant être fixé, de sorte que les bras 1 dans chaque cas, présentent un bras oscillant (14), qui présente une roue d'appuie (4) à l'extrémité du bras, de sorte que le un bras oscillant (14) est pivotant en 360 degrès autour de son axe de lacet et **caractérisée par le fait que** présente un élément d'amortissement (12).

2. Appareil entraînement en position inclinée pour motocycle selon la revendication 1, **caractérisé par le fait que** l'élément d'amortissement (12) comprenant un élastomère.

3. Appareil entraînement en position inclinée pour motocycle selon la revendication 2, **caractérisé par le fait que** l'élément d'amortissement (12) présente une dureté Shore A de 70 à 97 (selon DIN 53505).

4. Appareil entraînement en position inclinée pour motocycle selon la revendication de 2 à 3, **caractérisé par le fait que** l'élément d'amortissement (12) présente un axe de guidage (11), dont la longueur es plus petite que la longueur l'élément d'amortissement (12).

5. Appareil entraînement en position inclinée pour motocycle selon la revendication de 3 à 4, **caractérisée par le fait que** l'élément d'amortissement (12) est soumis à prétension.

6. Appareil entraînement en position inclinée pour motocycle selon les revendications de 2 à 5, **caractérisée par le fait que** l'élément d'amortissement (12) est soumis à prétension, comme le mouvement de le bras oscillant (14) est abrégé par un boulon.

7. Appareil entraînement en position inclinée pour motocycle selon la revendication 1, **caractérisée par le fait que** l'angle des bras (1) est réglable par rapport à l'axe du motocycle à la verticale, debout.

8. Appareil entraînement en position inclinée pour motocycle selon l'une des revendications 1 à 3, **caractérisé par le fait que** le bras (1) est réglable en longueur.

9. Appareil entraînement en position inclinée pour motocycle selon l'une des revendications 1 à 6, **caractérisé par le fait que** le bras oscillant (14) avec la roue d'appuie (4) y joint est difficile de faire fonctionner avec la rotation, de sorte que le bras oscillant (14) ne tourne pas à l'extérieur sans effet, par laquelle le bras oscillant (14) est pivotant sur 360 degrés autour de son axe de lacet.

10. Appareil entraînement en position inclinée pour motocycle selon l'une des revendications 1 à 8, **caractérisé par le fait que** au niveau de chaque bras (1) un bouclier (3) est fixé à l'axe longitudinal du bras de la longueur du cadre du motocycle, donc dans 90 degrés au-dessus, sur lequel le conducteur avec une baisse peut se repousser.
